# EUROPEAN PATENT APPLICATION

(11) **EP 1 832 789 A2**
(43) Date of publication of application: **12.09.2007**
(21) Application number: 07250966.4
(22) Date of filing: 08.03.2007
(51) Int. Cl.: F16K 15/04

(54) **Valve assemblies**

(30) Priority: 08.03.2006 GB 0604686
(71) Applicant: Delphi Technologies, Inc., Troy, Michigan 48007 (US)
(72) Inventor: Arnold, Jonathan, Ringwood, Hampshire BH24 3AA (GB)
(74) Representative: Hopley, Joanne Selina

(57) **Abstract**

A valve assembly is arranged within a wide-bore region (2) of a fluid conduit (3) and comprises a ceramic ball (1), a piston (6) and a helical compression spring (5) which biases the ball (1) into its closed position on a conical seating (4).

The head of the piston (6) mates with the ball (1) so as to centre it within the conduit (3). The head of the piston (6) is shaped so as to permit fluid to flow between the piston head and the wall of the conduit (3) and to guide the piston within the conduit (3). The other end of the piston (6) is formed with a rounded projection (8) which mates with a recess (9) of a housing module (10) so as both to dampen and limit the movement of the piston (6).

Fluid pumped into the conduit (3) in the direction of the arrow causes the ball (1) to lift from its seating (4) and to force the piston (6) along the conduit (3) against the biasing force of the spring (5), permitting fluid flow through the valve assembly. When the fluid pressure subsides, the biasing force of the spring (5) causes the ball valve (1) and the piston (6) to return to the closed position.

## Description

The present invention relates to valve assemblies, and more particularly to valve assemblies for use in a common-rail fuel injection system for supplying high-pressure fuel to a compression ignition internal combustion engine, such as a diesel engine.

In such compression ignition internal combustion engines, fuel is pumped to the fuel injection system by applying high-pressure pulses to the fuel which cause the pump outlet valve to open, thereby enabling a predetermined amount of fuel to pass into the common rail injection system.

In order to increase performance of such internal combustion engines, it is expected that the pumps will be run at higher flow rates and at higher pressures. However, to accommodate such changes it will be necessary to modify the structure of the outlet valve.

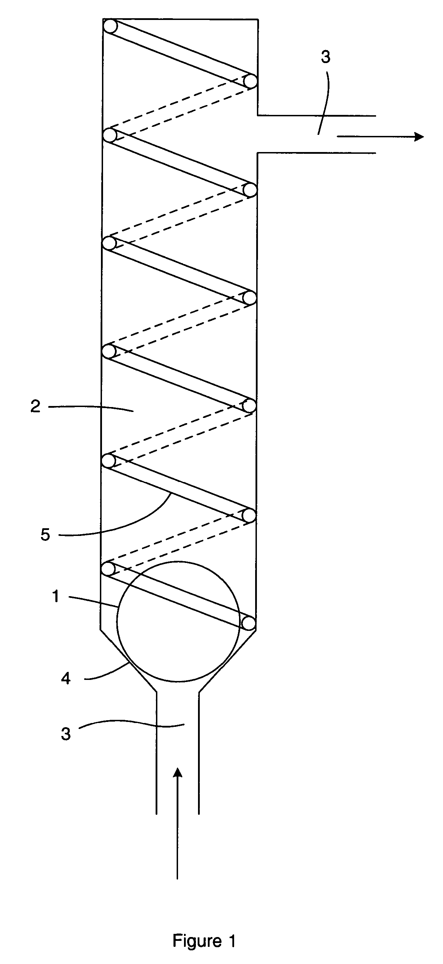

A typical outlet valve is illustrated schematically in Figure 1 and consists of a metallic ball 1 which is located within a wide-bore region 2 of a conduit 3 through which the fuel is caused to pass in the direction of the arrow, from the pump to the fuel injection system. When closed, the ball 1 is biased against a conical seating 4 at the entrance to the wide-bore region 2 by means of a compression spring 5. When the fuel pressure difference across the valve assembly exceeds a predetermined value, the ball 1 is lifted from the conical seating 4, thereby permitting fuel to pass.

As can be seen from Figure 1, the diameter of the metallic ball 1 is less than that of the wide-bore region 2 of the conduit 3, thereby enabling fuel to pass in the resulting gap when the valve is open.

However, this arrangement gives rise to an undesirable lateral nutation of the ball, which, in turn, causes undesirable vibrations and resonances.

US 5,183,075, in attempting to solve this problem, provides a valve element with a spherical surface portion having a diameter substantially equal to that of the conduit in which the valve element moves, but which contains axially aligned recesses in which the fluid can flow between the element and the wall of the conduit. However, this arrangement requires the spherical surface portion to adopt a predetermined orientation within the conduit, in order that the recesses are maintained at the correct alignment, and is also likely to give rise to a weakening of the valve element.

In the present Applicant's co-pending European Patent Application No. 05251433.8, there is described an alternative solution to this problem. A ball is provided, again with a diameter substantially equal to that of the conduit in which the ball moves, but the conduit is formed with three axially aligned external recesses through which the fluid can pass.

It would be desirable to provide arrangements which enable the fluid to pass the ball, which do not give rise to such vibrations and in which the strength of the ball is not compromised.

Thus, in accordance with a first aspect of the present invention there is provided a valve assembly for controlling the flow of fluid, comprising a ball engageable with a valve seating region to prevent the flow of fluid through a conduit having an internal wall; biasing means, for example a spring, for urging the ball into engagement with the valve seating region; and a piston located between the biasing means and the ball and arranged, in use, to move within the conduit against the force of the biasing means when the ball is acted on by fluid under pressure entering the valve assembly; wherein the piston comprises at least one passage through which the fluid may pass; a first end comprising a surface which, in use, bears on the ball and is shaped so as to retain the ball in a substantially central position within the conduit; a second end distant from the first end; a first guiding portion at or adjacent to the first end and arranged to slide along the surface of the internal wall of the conduit; and a second guiding portion at or adjacent to the second end of the piston; and wherein the valve assembly further comprises a guiding means for receiving the second guiding portion of the piston.

The first and second guiding portions allow the piston to move in a longitudinal direction within the conduit, but inhibit, prevent or reduce lateral movement of the piston, and consequently the ball which is retained by the piston, within the conduit. In this way, vibrations and other such movements of the piston and the ball are prevented.

Advantageously, the first and second guiding portions allow the piston to articulate within the conduit so that manufacturing tolerances may be accommodated. Therefore, in a preferred embodiment, the conduit defines a first axis and the piston defines a second axis; and the first guiding portion of the piston is shaped so as to maintain sliding contact with the wall of the conduit when the second axis forms a non-zero angle with the first axis. The non-zero angle may be substantial, for example up to 20°.

Preferably, at least one surface of the first guiding portion is convex so as to define a barrel-shaped envelope of the first guiding portion. The first guiding portion may comprise two or more arms, each arm comprising a curved end surface to bear against the surface of the conduit. In one embodiment, for example, the first guiding portion comprises four arms so as to define a cruciform cross-section of the first guiding portion. When the first guiding portion includes arms, the passage through which the fluid may pass may elegantly comprise a space between two arms of the first guiding portion. In an alternative arrangement, the passage through which the fluid may pass comprises a recess in an outer wall of the first guiding portion.

The valve assembly may further comprise means for damping the movement of the ball along the conduit. By damping the movement of the ball along the conduit, this reduces its peak velocity and thereby reduces the stresses on the spring.

It is preferred that the damping means serves to reduce the velocity of the ball only when travelling from the closed to the open positions, since it is desirable for the valve to close quickly as soon as the fluid pressure has subsided. Therefore, the damping means may be arranged to dampen the movement of the ball only in the direction away from the valve seating region. Conveniently, the damping means is associated with the second guiding portion and the guiding means.

In one embodiment, the second guiding portion comprises a rounded projection of the piston. The guiding means may comprise a recess for receiving the rounded projection of the piston, in which case the valve assembly may further comprise a module in which the recess is formed.

The valve assembly may further comprise means for limiting the extent of movement of the ball along the conduit. In this way, excessive movement of the ball, beyond that required to effect fluid flow past the valve seating region, is prevented, which for example allows the valve to be rapidly closed and opened if desired.

The limiting means may conveniently be associated with the second guiding portion and the guiding means. In particular, a portion of the second guiding portion may be arranged to abut a portion of the guiding means so as to form the limiting means.

According to a second aspect of the invention, there is provided a valve assembly for controlling the flow of fluid, comprising a ball defining a ball volume and engageable with a valve seating region to prevent the flow of fluid through a conduit having an internal wall; biasing means for urging the ball into engagement with the valve seating region; and a piston defining a piston volume and located between the biasing means and the ball and arranged, in use, to move within the conduit against the force of the biasing means when the ball is acted on by fluid under pressure entering the valve assembly, wherein the ball is made from a first material and the piston is made from a second material, the density of the second material being greater than the density of the first material; the mass of the ball being defined by the product of the ball volume and the density of the first material, and the mass of the piston being defined by the product of the piston volume and the density of the second material; and the combined mass of the ball and the piston is equal to or greater than the product of the ball volume and the density of the second material. Preferably, the first material is a ceramic material, such as silicon nitride. The second material may be a metallic material.

The combination of a relatively low-density ball and a relatively high-density piston facilitates the use of a low-density material with wear-resistant properties as the material of the ball, while at the same time providing sufficient inertia, by way of the relatively heavy piston, to the ball and piston combination to ensure the peak velocity of the ball is relatively low, for example to avoid excessive stresses on the components of the valve assembly.

Optionally, the ball is attached to the piston so as to form a composite component.

According to a third aspect of the invention, there is provided a valve assembly for controlling the flow of fluid in a high pressure pump, the valve assembly comprising a ball of spherical shape engageable with a valve seating region to prevent the flow of fluid through a conduit having an internal wall; biasing means for urging the ball into engagement with the valve seating region; and an insert in the form of a substantially annular member; wherein the valve seating region comprises a surface of the insert which, in use, is located within the conduit at a transition from a narrow-bore region to a wide-bore region; and the ball is located in the wide-bore region of the conduit.

If an insert were not present, then the minimum practical diameter of the ball would be somewhat larger than the diameter of the narrow-bore region. By providing an insert, the diameter of the ball need not be dependent on the diameter of the narrow-bore region, and can be appreciably smaller than the diameter of the narrow-bore region. Furthermore, it may be easier to form the valve seating region on an insert, separately from the conduit, than to form the valve seating region directly within the conduit.

The third aspect of the invention is particularly preferred when the narrow-bore region comprises an inlet passage of the pump and the wide-bore region comprises an outlet passage of the pump.

The insert may be arranged for use in a conduit in which the transition from the narrow-bore region to the wide-bore region is in the form of a frusto-conical surface, in which case the insert may comprise an outer substantially frusto-conical surface for mating with the frusto-conical surface of the conduit, and an inner valve seating surface for seating the ball. In this case, the outer substantially frusto-conical surface may comprise two adjacent frusto-conical surfaces with different cone angles to define an annular ridge to mate with the frusto-conical surface of the conduit, so as to form a robust seal between the insert and the conduit. The minimum diameter of the frusto-conical surface of the conduit may be equal to, or greater than, the diameter of the ball.

Means may be provided for biasing the insert against the internal wall of the conduit. For example, the insert-biasing means may comprise a first compression spring.

In one possible arrangement, the biasing means for urging the ball into engagement with the valve seating region comprises a second compression spring. In this case, the first compression spring may be in the form of a helix of a first, relatively large diameter, and the second compression spring may be in the form of a helix of a second, relatively small diameter, the first and second compression springs being wound in opposite sense.

The valve assembly of the third aspect of the invention may further comprise a piston located between the biasing means and the ball and arranged, in use, to slide along the conduit within the first compression spring when the ball is acted on by fluid under pressure entering the valve assembly; wherein the surface of the piston which, in use, bears on the ball is shaped so as to retain the ball valve in a substantially central position within the conduit.

The valve seating region preferably has a frusto-conical surface, in which case the cone angle of the frusto-conical surface may, for example, be between 60° and 70°. Alternatively, the valve seating region may have a curved profile which at least partly matches the spherical shape of the ball.

According to a fourth aspect of the present invention, there is provided a valve assembly for controlling the flow of fluid in a high pressure pump, the valve assembly comprising a ball engageable with a valve seating region to prevent the flow of fluid through a conduit having an internal wall; biasing means for urging the ball into engagement with the valve seating region; and guiding means for guiding movement of the ball; wherein the guiding means comprises a first, helical spring arranged within the conduit and within which the ball is slidable.

By providing a guiding means comprising a helical spring, the ball is guided within the conduit so that lateral movements of the ball in use, such as vibration or nutation, are mitigated or eliminated. Preferably, an inner diameter of the first spring substantially matches the diameter of the ball, so as to optimise the function of the guiding means.

The valve assembly of the fourth aspect of the invention may further comprise a piston located between the biasing means and the ball and arranged, in use, to move within the conduit against the force of the biasing means when the ball is acted on by fluid under pressure entering the valve assembly; wherein the biasing means for urging the ball into engagement with the valve seating region comprises a second, compression spring, and wherein the second spring is accommodated within an inner diameter of the first spring.

The first spring is advantageously wound in the opposite sense to the second spring, so that the second, inner spring may move without snagging on the first, outer spring. The first spring may be a compression spring, and may be held under compression within the conduit.

The valve assembly of the fourth aspect of the invention may further comprise an insert in the form of a substantially annular member, wherein the valve seating region comprises a surface of the insert which, in use, is located within the conduit at a transition from a narrow-bore region to a wide-bore region; the ball is located in the wide-bore region of the conduit; and the first spring acts upon the insert to bias the insert against the internal wall of the conduit. In this way, the advantages of the third aspect are conferred on the fourth aspect of the invention.

According to a fifth aspect of the invention, there is provided a valve assembly for controlling the flow of fluid, comprising a ball engageable with a valve seating region to prevent the flow of fluid through a conduit having an internal wall; and biasing means for urging the ball into engagement with the valve seating region; the valve assembly further comprising a piston located between the biasing means and the ball and arranged, in use, to slide along the surface of the internal wall against the force of the biasing means when the ball is acted on by fluid under pressure entering the valve assembly; wherein the surface of the piston which, in use, bears on the ball is shaped so as to retain the ball in a substantially central position within the conduit; and wherein the piston is formed with at least one passage through which the fluid may pass. Preferably, at least one passage is defined by a recess in the outer surface of the piston. The ball may be made from a ceramic material.

By providing a separate piston which is arranged to slide along the surface of the internal wall and having a surface which retains the ball in a substantially central position within the conduit, and which is further provided with at least one conduit through which the fluid may pass, this enables the ball to be of substantially solid construction and also prevents lateral movement of the ball within the conduit.

Furthermore, the provision of a separate piston increases the total mass which is moved along the conduit against the spring bias by action of the pressurised fluid. This, therefore, has the effect of decreasing the peak velocity and reducing the stresses on the spring. The valve assembly may also comprise means for limiting the extent of movement of the ball along the conduit, and/or means for damping the movement of the ball along the conduit.

The use of a metal for the ball has been considered desirable, since the resulting relatively large mass reduces the peak velocity of the ball in use and consequently also reduces the stresses on the compression spring. For the same reason, it has been considered desirable for a relatively large ball to be used. However, the use of a large metal ball also gives rise to a relatively high degree of wear on both the ball and the conical seating.

It would therefore be desirable to provide arrangements which do not give rise to such wear and, preferably also, which do not increase the stresses on the compression spring.

In accordance with a sixth aspect of the present invention there is provided a valve assembly for controlling the flow of fluid, comprising a ball engageable with a valve seating region to control fluid flow through a conduit having an internal wall; and biasing means for urging the ball into engagement with the valve seating region; wherein the ball is made from a ceramic material.

By forming the ball from a ceramic material, this reduces the wear on the ball. A preferred ceramic material for the ball is silicon nitride, and the ball is preferably between 4.5 mm and 6 mm in diameter.

However, this also reduces the mass of the ball as compared with the conventional metallic balls, thereby increasing its peak velocity, which, in turn can give rise to increased stresses on the spring. In accordance with preferred embodiments of the present invention, the valve assembly is therefore provided with means for limiting and/or damping the movement of the ball.

Whereas it may be desirable for the ball to be relatively small, the diameter of the ball is limited by the diameter of the narrow-bore regions of the conduit. It would therefore be desirable to provide an arrangement by which this limitation could be overcome. Thus, in accordance with a seventh aspect of the present invention, there is provided a valve assembly for controlling the flow of fluid, comprising a ball engageable with a valve seating region to prevent the flow of fluid through a conduit having an internal wall; and biasing means for urging the ball into engagement with the valve seating region; an insert in the form of a substantially annular member; wherein the valve seating region comprises a surface of the insert which, in use, is located within the conduit at a transition from a narrow-bore region to a wide-bore region.

The insert may be arranged for use in a fluid conduit in which the transition from the narrow-bore region to the wide-bore region is in the form of a conical surface, wherein the insert comprises an outer substantially conical surface for mating with the conical surface of the conduit, and an inner substantially conical surface for seating the ball. The minimum diameter of the outer conical surface may be equal to, or greater than, the diameter of the ball.

The valve assembly may further comprise means for biasing the insert against the internal wall of the conduit, and the insert-biasing means may comprise a first compression spring. In particular, the biasing means for urging the ball into engagement with the valve seating region may comprise a second compression spring. The first compression spring may be in the form of a helix of a first, relatively small diameter, and the second compression spring may be in the form of a helix of a second, relatively large diameter, the first and second compression springs being wound in opposite sense.

The valve assembly of the seventh aspect of the invention may further comprise a piston located between the biasing means and the ball and arranged, in use, to slide along the conduit within the first compression spring when the ball is acted on by fluid under pressure entering the valve assembly; wherein the surface of the piston which, in use, bears on the ball is shaped so as to retain the ball in a substantially central position within the conduit.

The valve assembly of the fifth or sixth aspects of the invention may likewise comprise an insert in the form of a substantially annular member; wherein the valve seating region comprises a surface of the insert which, in use, in located within the conduit at a transition from a narrow-bore region to a wide-bore region.

According to an eighth aspect of the present invention, there is provided a valve assembly for controlling the flow of fluid, comprising a ball engageable with a valve seating region to prevent the flow of fluid through a conduit having an internal wall; biasing means for urging the ball into engagement with the valve seating region; the arrangement being such that the supply of fluid under pressure causes the ball to lift from the valve seating region, thereby to permit fluid to flow into the conduit; the valve assembly further comprising means for limiting the extent of movement of the ball along the conduit.

By limiting the extent of movement of the ball along the conduit, this limits its peak velocity and thereby reduces the stresses on the spring.

According to a ninth aspect of the present invention, there is provided a valve assembly for controlling the flow of fluid, comprising a ball engageable with a valve seating region to prevent the flow of fluid through a conduit having an internal wall; biasing means for urging the ball into engagement with the valve seating region; the arrangement being such that the supply of fluid under pressure causes the ball to lift from the valve seating region, thereby to permit fluid to flow into the conduit; the valve assembly further comprising means for damping the movement of the ball along the conduit.

By damping the extent of movement of the ball along the conduit, this limits its peak velocity and thereby reduces the stresses on the spring.

It is preferred that the damping means serves to reduce the velocity of the ball only when travelling from the closed to the open positions, since it is desirable for the valve to close quickly as soon as the fluid pressure has subsided. Therefore, the damping means is preferably arranged to dampen the movement of the ball only in the direction away from the valve seating region.

A valve assembly according to the eighth or ninth aspects of the invention may further comprise a piston located between the biasing means and the ball and arranged, in use, to slide along the conduit within the first compression spring when the ball is acted on by fluid under pressure entering the valve assembly; wherein the limiting or damping means comprises means rigidly attached to the conduit and arranged to act on an end of the piston remote from the ball.

In accordance with a tenth aspect of the invention, the transition from a narrow bore to a wide bore within the conduit, or the valve seating region, of a valve assembly according to any of the fifth to ninth aspects of the invention has a conical surface. Preferably, the cone angle of the conical profile is between 60° and 70°.

However, in accordance with an eleventh aspect of the present invention, the valve seating region has a curved profile which at least partly matches the spherical shape of the ball.

The curved profile may take the form of an arc, an ellipse or a parabola of revolution. Such arrangements provide an effective increase in contact area over the line contact which is provided with a conical profile.

According to a twelfth aspect of the present invention, there is provided a valve assembly for controlling the flow of fluid, comprising a ball engageable with a valve seating region to prevent the flow of fluid through a conduit having an internal wall; and biasing means for urging the ball into engagement with the valve seating region; wherein the valve seating region has a curved profile which at least partly matches the spherical shape of the ball.

Preferred and/or optional features of each aspect of the invention may be incorporated alone, or in appropriate combination, within the other aspects of the invention also.

Preferred embodiments of the present invention will now be described with reference to the following drawings, in which the same reference numerals have been used to indicate corresponding features:
Figure 1 is a cross-sectional representation of a known form of valve assembly;
Figure 2 is a cross-sectional representation of a preferred embodiment of valve assembly in accordance with the present invention;
Figure 3 is a cross-sectional representation of an alternative embodiment of ball valve assembly in accordance with the present invention;
Figure 4 is a cross-sectional representation of an embodiment similar to that shown in Figure 3, but wherein the profile of the valve seating region is different; and
Figure 5 is a cross-sectional representation of an embodiment similar to that shown in Figure 3, but with an additional insert to retain a ball of reduced size relative to the diameter of the inlet conduit.

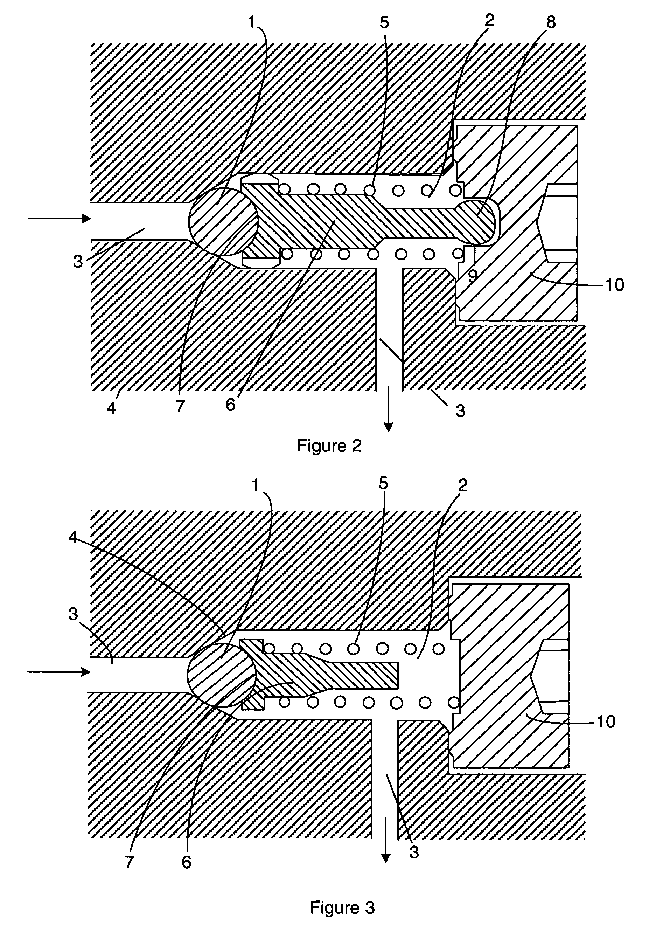

Referring to Figure 2, a valve assembly in accordance with a preferred embodiment of the present invention is arranged within a wide-bore region 2 within a fluid conduit 3. The valve assembly comprises a ceramic ball 1 and a piston 6 biased into a closed position against a conical seating 4 within the conduit 3 by means of a helical compression spring 5. The ceramic ball is made from silicon nitride and has a diameter of about 5 mm. The cone angle of the conical seating 4 is about 65°.

The head of the piston 6 is formed with a hemispherical depression 7 which mates with the spherical surface of the ball 1 and which retains it in a central position within the wide-bore region 2 of the conduit 3. The outer edge of the piston head is formed with a number of recesses in the form of flutes which permit the flow of fluid between the head of the piston 6 and the internal wall of the conduit 3. The recesses are arranged to define four arms which together form a cruciform shape in cross-section. Each arm has a curved end surface 13 which bears upon the internal wall of the conduit, so that the head of the piston 6 has a barrel-shaped envelope. The other end of the piston 6 is formed with a rounded projection 8 which mates with a corresponding recess 9 of a module 10 of the valve housing. Such a projection 8 is highly advantageous in that is permits a high degree of axial misalignment between the conical seating 4, the wide-bore region 2 of the conduit 3 and the module 10, while still providing guiding, damping and stopping of the ball 1.

In operation, fluid is pumped at high pressure into the conduit 3 in the direction of the arrow. This causes the ball 1 to lift away from its conical seating 4 and to force the piston 6 along the conduit 3 against the biasing force of the helical compression spring 5. The fluid is therefore allowed to flow into the wide-bore region 2 of the conduit 3 and, by means of the recesses in the piston head, through to the outlet of the conduit 3, again in the direction of the arrow.

The extent of movement of the ball 1 and the piston 6 is limited by the mating of the rounded projection 8 of the piston 6 with the recess 9 in the valve housing. The rounded projection 8 forms a close fit within the housing recess 9, so that the movement of the ball 1 and the piston 6 away from its closed position is damped by virtue of the fluid which is trapped between the projection 8 and the housing recess 9. This damping arrangement has been found to be effective and to operate substantially independently of temperature variations.

When the fluid pressure subsides, the biasing force of the helical compression spring 5 causes the ball 1 and the piston 6 to return to their closed positions. However, it will be appreciated that the damping force arising from the presence of trapped fluid in the housing recess 9 does not restrict to any appreciable extent the return movement of the ball 1 and piston 6, so that the valve is closed substantially immediately after a reduction of pressure in the fluid supply from the pump.

The curved end surfaces 13 of the arms at the head of the piston 6 serve as guiding means which inhibit lateral movement of the piston within the conduit 3, in particular when the ball 1 lifts away from the seating 4. Therefore, by virtue of the curved end surfaces 13 and the rounded projection 8, the piston 6 is guided within the conduit 3, even if a high degree of axial misalignment exists between the conical seating 4, the wide-bore region 2 of the conduit 3 and the module 10. If such misalignment does exist, a central longitudinal axis of the piston 6 forms a non-zero angle with the longitudinal axis of the wide-bore region 2 of the conduit 3. In other words, the piston 6 is articulated between the module 10 and the conduit 3.

This arrangement allows for manufacturing tolerances in the alignment of the component parts of the valve assembly, and for manufacturing tolerances in the parts themselves, for example in the concentricity of the module 10. In a typical example, the longitudinal axis of the piston 6 may lie at an angle of 1 or 2 degrees from the longitudinal axis of the wide-bore region 2 of the conduit 3. However, the piston and conduit axes may be misaligned by a significantly larger angle, for example 20 degrees, without impairing the functionality of the valve assembly.

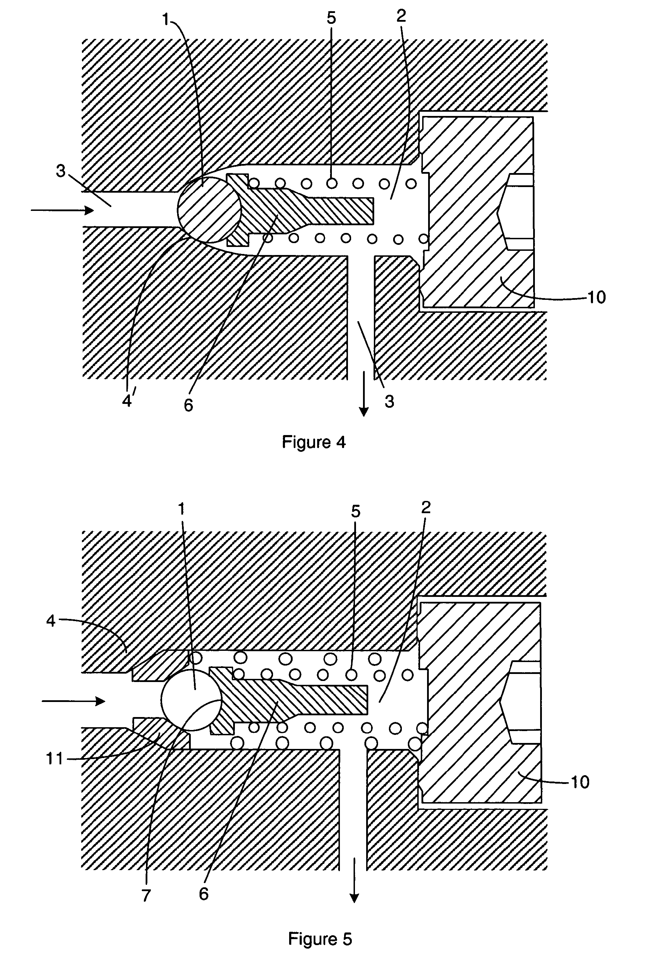

Figure 3 illustrates an alternative embodiment in which only the ceramic ball 1, the piston 6 and the helical compression spring 5 are included in the wide-bore section 2 of the valve assembly. Thus, in this arrangement, there are no recesses in the edge of the head of the piston 6 nor any means of limiting or damping the movement of the ball 1 and piston 6 away from the closed position.

Figure 4 illustrates an alternative arrangement to that shown in Figure 3, in which the valve seating 4' within the conduit 3 is formed with a curved profile so as to provide a greater area of contact with the spherical ball 1.

In Figure 5, there is shown an alternative embodiment which is suitable for arrangements in which the diameter of the ball 1 is smaller than that of a narrow-bore region 14 of the conduit 3, upstream of the wide-bore region 2. As in the previous embodiments of the invention, the transition between the narrow-bore region 14 and the wide-bore region 2 of the conduit 3 comprises a frusto-conical face 15. Unlike the previous embodiments, however, the frusto-conical face 15 of the conduit 3 does not form a seating surface for the ball 1. Instead, in order to effect a sealing of the valve, an insert 11 is provided which is in the form of an annulus with a cross-section in the form of a heptagon. Two of the opposing sides of the insert 11 define respective inner and outer frusto-conical faces. The inner frusto-conical face 16 of the insert 11 provides a seating surface for the ball 6. The outer frusto-conical face is clamped in position on the frusto-conical face 15 of the conduit 3 by means of an outer helical compression spring 12 which is wound in the opposite sense to that of the inner compression spring 5, so as to prevent interlocking of the two springs.

The outer compression spring 11 additionally serves the functions of guiding the ball, allowing fluid to pass around the ball and discouraging nutation, not only by guiding the ball, but possibly also by biasing the vortex shedding so as to prevent chaotic movement of the fluid. To this end, the inner diameter of the outer compression spring substantially matches the diameter of the ball.

Although not shown in detail in Figure 5, the outermost surface of the insert 11 which is in contact with the frusto-conical face 15 of the conduit 3 is in the form of two frusto-conical surfaces having a very small difference in cone angle, e.g. 1°, which meet to form an annular ridge or sharp circular edge which forms a seal with the conduit wall when under pressure. The small angle between the two surfaces ensures that the resulting stresses are low.

In any embodiment of the invention, the ball 1 may be made from a ceramic material, while the piston 6 may be made from a metallic material. In such a case, the combined mass of the ball 1 and the piston 6, taken together, is equal to or greater than the mass of a ball with the same dimensions as the ceramic ball 1, but made from the metallic material of the piston 6. In this way, the combination of the ceramic ball 1 and the metallic piston 6 offers the desirable wear-resistance properties of a ceramic ball, while at the same time providing sufficient inertia to the ball and piston combination to ensure the peak velocity of the ball 1 is relatively low, for example to avoid excessive stresses on the spring 5.

It is conceivable that the ball and piston may be joined to one another, so as to form a piston having an integral ceramic head region.

It will be appreciated that combinations of features not described in the embodiments above are also possible, as set out in the appended claims. For example, an outer compression spring as described with reference to Figure 5 may be provided even when no insert is present, to act as a guide for the ball.

## Claims

1. A valve assembly for controlling the flow of fluid, comprising:
a ball (1) engageable with a valve seating region (4) to prevent the flow of fluid through a conduit (3) having an internal wall;
biasing means (5) for urging the ball (1) into engagement with the valve seating region (4); and
a piston (6) located between the biasing means (5) and the ball (1) and arranged, in use, to move within the conduit (3) against the force of the biasing means (5) when the ball (1) is acted on by fluid under pressure entering the valve assembly;
wherein the piston (6) comprises:
at least one passage through which the fluid may pass;
a first end comprising a surface (7) which, in use, bears on the ball (1) and is shaped so as to retain the ball (1) in a substantially central position within the conduit (3);
a second end distant from the first end;
a first guiding portion (13) at or adjacent to the first end and arranged to slide along the surface of the internal wall of the conduit (3); and
a second guiding portion (8) at or adjacent to the second end of the piston (6);
and wherein the valve assembly further comprises:
a guiding means (9) for receiving the second guiding portion (8) of the piston (6).

2. A valve assembly as claimed in Claim 1, wherein:
the conduit (3) defines a first axis and the piston (6) defines a second axis; and
the first guiding portion (13) of the piston is shaped so as to maintain sliding contact with the wall of the conduit (3) when the second axis forms a non-zero angle with the first axis.

3. A valve assembly as claimed in Claim 2, wherein at least one surface (13) of the first guiding portion is convex so as to define a barrel-shaped envelope of the first guiding portion.

4. A valve assembly as claimed in Claim 2 or Claim 3, wherein the first guiding portion comprises two or more arms, each arm comprising a curved end surface (13) to bear against the surface of the conduit (3).

5. A valve assembly as claimed in Claim 4, wherein the first guiding portion (13) comprises four arms so as to define a cruciform cross-section of the first guiding portion (13).

6. A valve assembly as claimed in Claim 4 or Claim 5, wherein the passage through which the fluid may pass comprises a space between two arms of the first guiding portion (13).

7. A valve assembly as Claimed in any of Claims 1 to 3, wherein the passage through which the fluid may pass comprises a recess in an outer wall of the first guiding portion.

8. A valve assembly as claimed in any preceding Claim, wherein the valve assembly further comprises means (8, 9) for damping the movement of the ball (1) along the conduit (3).

9. A valve assembly as claimed in Claim 8, wherein the damping means (8, 9) is arranged to dampen the movement of the ball (1) only in the direction away from the valve seating region (4).

10. A valve assembly as claimed in Claim 8 or Claim 9, wherein the damping means is associated with the second guiding portion (8) and the guiding means (9).

11. A valve assembly as claimed in any preceding Claim, wherein the second guiding portion comprises a rounded projection (8) of the piston (6).

12. A valve assembly as claimed in Claim 11, wherein the guiding means comprises a recess (9) for receiving the rounded projection (8) of the piston (6).

13. A valve assembly as claimed in Claim 12, wherein the valve assembly further comprises a module (10) in which the recess (9) is formed.

14. A valve assembly as claimed in any preceding Claim, wherein the valve assembly further comprises means (8, 9) for limiting the extent of movement of the ball (1) along the conduit (3).

15. A valve assembly as claimed in Claim 14, wherein the limiting means is associated with the second guiding portion (8) and the guiding means (9).

16. A valve assembly as claimed in Claim 15, wherein a portion of the second guiding portion (8) is arranged to abut a portion of the guiding means (9) so as to form the limiting means.

17. A valve assembly for controlling the flow of fluid, comprising:
a ball (1) defining a ball volume and engageable with a valve seating region (4) to prevent the flow of fluid through a conduit (3) having an internal wall;
biasing means (5) for urging the ball (1) into engagement with the valve seating region (4); and
a piston (6) defining a piston volume and located between the biasing means (5) and the ball (1) and arranged, in use, to move within the conduit (3) against the force of the biasing means (5) when the ball (1) is acted on by fluid under pressure entering the valve assembly;
wherein:
the ball (1) is made from a first material and the piston (6) is made from a second material, the density of the second material being greater than the density of the first material;
the mass of the ball (1) being defined by the product of the ball volume and the density of the first material, and the mass of the piston (6) being defined by the product of the piston volume and the density of the second material; and
the combined mass of the ball (1) and the piston (6) is equal to or greater than the product of the ball volume and the density of the second material.

18. A valve assembly as claimed in Claim 17, wherein the first material is a ceramic material.

19. A valve assembly as claimed in Claim 18, wherein the first material is silicon nitride.

20. A valve assembly as claimed in any of Claims 17 to 19, wherein the second material is a metallic material.

21. A valve assembly as claimed in any of Claims 17 to 20, wherein the ball (1) is attached to the piston (6) so as to form a composite component.

22. A valve assembly for controlling the flow of fluid in a high pressure pump, the valve assembly comprising:
a ball (1) of spherical shape engageable with a valve seating region (16) to prevent the flow of fluid through a conduit (3) having an internal wall;
biasing means (5) for urging the ball (1) into engagement with the valve seating region (16); and
an insert (11) in the form of a substantially annular member;
wherein:
the valve seating region (16) comprises a surface of the insert (11) which, in use, is located within the conduit (3) at a transition from a narrow-bore region (14) to a wide-bore region (2); and
the ball (1) is located in the wide-bore region (2) of the conduit (3).

23. A valve assembly as claimed in Claim 22, wherein the narrow-bore region (14) comprises an inlet passage of the pump and the wide-bore region (2) comprises an outlet passage of the pump.

24. A valve assembly as claimed in Claim 22 or Claim 23, wherein:
the insert (11) is arranged for use in a conduit (3) in which the transition from the narrow-bore region (14) to the wide-bore region (2) is in the form of a frusto-conical surface (15); and
the insert (11) comprises an outer substantially frusto-conical surface for mating with the frusto-conical surface (15) of the conduit (2), and an inner valve seating surface (16) for seating the ball.

25. A valve assembly as claimed in Claim 24, wherein the outer substantially frusto-conical surface comprises two adjacent frusto-conical surfaces with different cone angles to define an annular ridge to mate with the frusto-conical surface (15) of the conduit (3).

26. A valve assembly as claimed in any one of Claims 23 to 25, wherein the minimum diameter of the frusto-conical surface (15) of the conduit (3) is equal to, or greater than, the diameter of the ball (1).

27. A valve assembly as claimed in any one of Claims 22 to 26, further comprising means (12) for biasing the insert (11) against the internal wall of the conduit (3).

28. A valve assembly as claimed in Claim 27, wherein the insert-biasing means comprises a first compression spring (12).

29. A valve assembly as claimed in Claim 28, wherein the biasing means for urging the ball (1) into engagement with the valve seating region (16) comprises a second compression spring (5).

30. A valve assembly as claimed in Claim 29, wherein the first compression spring (12) is in the form of a helix of a first, relatively large diameter, and the second compression spring (5) is in the form of a helix of a second, relatively small diameter, the first and second compression springs being wound in opposite sense.

31. A valve assembly as claimed in any one of Claims 28 to 30, further comprising
a piston (6) located between the biasing means (5) and the ball (1) and arranged, in use, to slide along the conduit (3) within the first compression spring (12) when the ball (1) is acted on by fluid under pressure entering the valve assembly;
wherein the surface of the piston (6) which, in use, bears on the ball (1) is shaped so as to retain the ball (1) in a substantially central position within the conduit (3).

32. A valve assembly as claimed in any one of Claims 22 to 31, wherein the valve seating region has a frusto-conical surface (16).

33. A valve assembly as claimed in Claim 32, wherein the cone angle of the frusto-conical surface (16) is between 60° and 70°.

34. A valve assembly as claimed in any one of Claims 22 to 31, wherein the valve seating region has a curved profile which at least partly matches the spherical shape of the ball (1).

35. A valve assembly for controlling the flow of fluid in a high pressure pump, the valve assembly comprising:
a ball (1) engageable with a valve seating region (4; 16) to prevent the flow of fluid through a conduit (3) having an internal wall;
biasing means (5) for urging the ball (1) into engagement with the valve seating region (4; 16); and
guiding means for guiding movement of the ball (1);
wherein the guiding means comprises a first, helical spring (12) arranged within the conduit (3) and within which the ball (1) is slidable.

36. A valve assembly as claimed in Claim 35, wherein an inner diameter of the first spring (12) substantially matches the diameter of the ball (1).

37. A valve assembly as claimed in Claim 35 or Claim 36, further comprising:
a piston (6) located between the biasing means and the ball (1) and arranged, in use, to move within the conduit (3) against the force of the biasing means when the ball (1) is acted on by fluid under pressure entering the valve assembly;
wherein the biasing means for urging the ball into engagement with the valve seating region (4; 16) comprises a second compression spring (5), and wherein the second spring (5) is accommodated within an inner diameter of the first spring (12).

38. A valve assembly as claimed in Claim 37, wherein the first spring (12) is wound in the opposite sense to the second spring (5).

39. A valve assembly as claimed in any of Claims 35 to 38, wherein the first spring (12) is a compression spring.

40. A valve assembly as claimed in Claim 39, wherein the first spring (12) is held under compression within the conduit (3).

41. A valve assembly as claimed in Claim 39 or Claim 40, wherein the valve assembly further comprises an insert (11) in the form of a substantially annular member, wherein:
the valve seating region (16) comprises a surface of the insert (11) which, in use, is located within the conduit (3) at a transition from a narrow-bore region (14) to a wide-bore region (2);
the ball (1) is located in the wide-bore region (2) of the conduit (3); and
the first spring (12) acts upon the insert (11) to bias the insert (11) against the internal wall of the conduit (3).
